# EUROPEAN PATENT APPLICATION

(11) **EP 3 925 449 A1**
(43) Date of publication of application: **22.12.2021**
(21) Application number: 20382532.8
(22) Date of filing: 19.06.2020
(51) Int. Cl.: A22C 29/02

(54) **METHOD AND DEVICE FOR DE-HEADING AND DE-VEINING A RAW HEADS-ON SHRIMP IN A FROZEN STATE**

(71) Applicant: iRaishrimp SL, 46190 Ribarroja del Turia (Valencia) (ES)
(72) Inventor: Wood, Patrick Julian, 46190 Ribarroja del Turia (Valencia) (ES)
(74) Representative: Carlos Hernando, Borja

(57) **Abstract**

A method and corresponding device for de-heading and de-veining a raw head-on of a shrimp (10) in a frozen state. The method comprises pinching, gripping or clamping a frozen shrimp (10) at the ventral part of the joint area (20) between the head (12) and the tail (11), flexing the head (12) back over the dorsal part of the tail (11) and then moving the head (12) and tail (11) away from each other while at the same time the vein is removed from inside the tail.

## Description

### FIELD OF THE INVENTION

The present invention refers to a method for de-heading and de-veining of raw heads-on whole shrimp, as well as to a device for implementing said method.

The invention therefore refers to the shrimp processing industry.

### BACKGROUND & PRIOR ART

Shrimp are classified as a crustacean. They are such a popular seafood item that the shrimp industry is one of the strongest seafood segments in the world today. The global shrimp market was valued at $45bn in 2018.

The demand for shrimp is increasing among consumers, as it is high in nutritional value and low-fat protein. It contains zero carbs and is very low in calories;-. ne gram of shrimp accounts approximately for one calorie. These, among many other factors such as flavor and ease of cooking, make people include shrimp in their food diet. Additionally, shrimp is rich in minerals and vitamins such as, iron, calcium, sodium, phosphorus, zinc, magnesium, potassium, iodine, niacin, riboflavin, thiamine, vitamin A, vitamin E, vitamin B6, and vitamin B12. All these minerals, vitamins, and nutrients contribute to make shrimp's appeal as a healthy food. Adding shrimp to one's diet helps in preventing many health issues such as hair loss, maintaining healthy bones, improving memory performance, reducing menstrual cramps, eliminating bad cholesterol, and reducing the risk of occurrence of lung and prostate cancer. Moreover, shrimp is a beneficial source of protein and vitamin D, and addsno carbohydrates to the consumers' daily intake; so for people determined to lose weight, this simple form of seafood is a popular option. It has been found that processed shrimp is one of the fastest moving commodities in the global market.

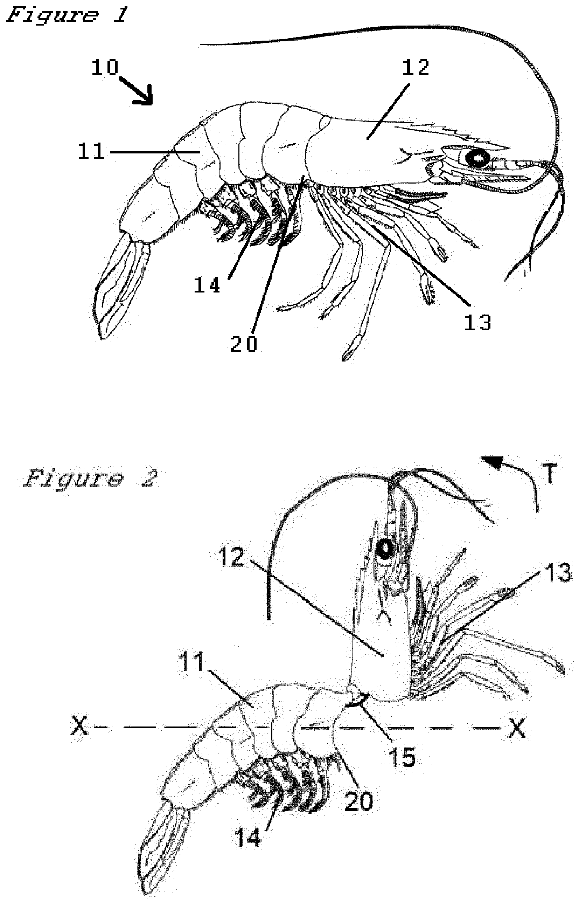

Shrimp (like crabs) are decapods. They have a thin, smooth, hard exoskeleton. They have two main distinct body parts: the "carapace" or fused cepthalothorax commonly known as the head *(see* *Figure 1* - *12**),* and the abdominal segments together with the telson, commonly known as the tail (see *Figure 1* - *11**).* In this description, the common usage of the words, head and tail, will be used.

The black vein that runs along the back of the shrimp is its digestive tract and,though the vein is edible, it can be unappetizing and full of grit or organic matter, so is usually removed before consumption.

In the global commercial industry, shrimp can be supplied to markets in a multitude of formats and a partial listed industry nomenclature relative to current state-of-art follows:
- HOSO: heads on shell on - whole shrimp raw.
- HLSO: headless shell on. Shrimp tails - known in industry as green tails.
- PUD: peeled unde-veined.
- PD (Or PND): peeled de-veined - knife cut vein removed.
- PV: pulled vein - needle pull.
- PTO:peeled de-veined tail-on. Last segment and telson shell kept
- EZpeel: headless back-cut shrimp shell on, vein present
- BFY: butterfly cut
- C - cooked: with any of previous abbreviations.
- RTE: Ready to eat
- Block: Block frozen
- IQF: Individually Quick Frozen
- MAP: Modified Atmospheric Packaged

Certain markets accept live and fresh, others frozen. Some other markets accept a cooked heads-on ready-to-eat (RTE IQF) frozen product. However, in the majority of markets, shrimp are value added processed (Head and shell removed) and frozen. Frozen logistics is required because of: the long supply chain distance, the time involved from harvest to market, the regulations of quality and food safety issues, and for market acceptance.

The value addition is to remove non-edible portions from the edible portions and target the appropriate market s for presentation. Therefore, value added processing and preparing a shrimp for consumption involves initially removing the head and can also involve removing the vein and the shell to varying degrees.

Regardless, the first step in any shrimp value added processing is thus removing the heads. The removal of the head is done manually. Currently, there is no commercial equipment available that undertakes this process in the global industry at any level and is extremely labor intensive. The manual de-heading task is undertaken on the raw whole fresh shrimp after capture in the boat or, if from aquaculture farming operations immediately on arrival at the processing, packing and exporting facility.

Value addition can then follow depending on the target market. In fact, de-headed tails only, traditionally called "green" tails or headless shell-on (HLSO), can be marketed to allow customers to value add according to their own requirements.

Value addition executed on these tails as a result of further processing can result in a market orientated peeled de-veined product (PD), peeled tail-on product (PTO), butterfly cut (BFY), a peeled un-de-veined (PUD) presentation, an EZ-peel cut, a western split cut, a back cut for sushi, nobashi, to name but a few options. All these different preparations can also be cooked and then frozen, or kept chilled, resulting in cooked peeled offerings such a cooked peeled tail-on (CPTO) for cocktail ring and dip presentations for example.

There are two main industry known techniques used commercially to remove the vein during value addition, both of them needing the shell to be removed in the first place:
- In the first technique, Japanese pulled vein (PV), a pin or crochet needle is inserted into the dorsal part (opposite side to where the legs of the shrimp are) of a shrimp, with the vein then being hooked or caught and pulled out and axially away from the uncut body segments.
- In the second technique, US knife cut, the dorsal part of a peeled shrimp is cut open to the depth of the vein and, thus revealed, therefore the vein can be removed.

Although these techniques can be satisfactory in ensuring that the entire vein is removed, the full cut significantly alters the shrimp shape and detracts from its appearance.

Further, there is another technique using a shell-on shrimp whereby a dorsal cut is made in the green tail (HLSO). This product is then left with the shell on and is called an EZ-peel. This allows for the removal of the shell and vein from the shrimp tail. These equipment to EZ peel are commercialized by Prawnto under US patent US5569065A

Additionally, an alternative method often used on larger prawns, and in white table cloth restaurants, is to use a pair of scissors to cut the back dorsal shell, then open up and expose vein for removal. The shell can also be removed.

Some patent application documents describing methods for de-veining shrimps are known. US4,816,276 discloses a method where the shell, head and swimmerettes of the shrimp are initially removed, after which a longitudinal cut is made through the backside of all of the shrimp's plurality of body segments except for the single body segments at its opposite end, adjacent the site of the removed head and the tail. This exposes an intermediate portion of the vein, which is then removed by pulling it out. In the process of the invention, all of the inedible portions of the shrimp are removed, the remainder is blanched and the vein removed on a cooked product. The process described herein does not involve the process of de-heading of shrimp.

US 3,031,714 provides an apparatus and a method which facilitate the de-veining of shrimp by throwing them back and forth from side to side across a line of travel along which they progress, and against a series of knives so placed as to cut the back of the shrimp and expose the sand vein thereof. The process described in this invention starts from a de-headed shrimp, but the invention does not explain how the shrimp is de-headed.

WO2016111934 refers to a method for processing raw shrimp. This method comprises: (a) cutting a slit in the back of a raw, head-on shrimp through the shell to expose the vein to produce a head-on, back-slit shrimp; (b) subjecting the head-on, back-slit shrimp to a turbulent flow of water to remove the head and at least some of the vein from the head-on, back-slit shrimp to produce a headless shrimp with residual shell; and (c) removing residual shell and vein from the headless shrimp in a roller-type peeler. In this document, one version of the shrimp-processing system embodying features comprises a back cutter cutting a slit in the back of a raw head-on shrimp; a hydraulic de-header receiving the raw, head-on shrimp and subjecting it to a turbulent flow of water to remove the head and at least some of the vein from the head-on, back-slit shrimp to produce a headless shrimp with residual shell; and a roller-type peeler receiving the headless shrimp and peeling residual shell and vein from the headless shrimp.

The above are shrimp processing patents involving de-veining, without reference to de-heading methods. These methods at the current state of the art present important drawbacks regarding safety and quality of the processed shrimp: in particular, there exists the possibility of damaging the body of the shrimps when making the longitudinal cut for de-veining and there can even be a high meat yield loss. Furthermore, when operating on fresh shrimp, contrary to operating on a frozen shrimp, the quality and food safety can also be compromised, as the body of the shrimp can also be damaged more easily and /or contaminated.

De-heading of shrimp, not explained in these previous patents, and as previously mentioned, being a manual operation across the industry, can also often result in some problems. One of them is damage or even explosion of the shrimp hepatopancreas and subsequent splattering of these inedible parts across the processing environment which can lead to bacterial build up and cross contamination of human work areas and even on the finished value added shrimp protein. Therefore, de-heading shrimp under the current industry manual method may be considered as a bio-security food safety critical control point.

In view of the above, the present invention provides a method for de-heading and de-veining shrimp that solves the above related prior art drawbacks, and current industry state-of-the-art methods, while improving the quality and food safety handling issue for the resultant shrimp.

The method described in this current innovation comprises the de-heading and de-veining of heads carried out on whole (HOSO) raw shrimp in a frozen state.

For the purpose of the present invention, the term "frozen state" refers to shrimp where the core body temperature is at range of minus 6°C to minus 1°C and a preferred temperature of minus 1°C.

The raw frozen whole shrimp is subject to specific process steps which enable the head to be removed in a clean manner, without exploding the hepatopancreas and allows for the vein to be pulled out along with the head all in the same motion, with no need to de-vein the shrimp with additional knife cuts, needle pulls or scissor cuts.

The present invention's method also provides additional advantages that contribute to the improvement of the quality of the processed shrimp, such as better texture and flavor due to the fact that the core body meat of the shrimp tail maintains its frozen state during the prescribed method of de-heading and de-veining.

Furthermore de-heading from frozen state results in higher food safety and hygiene. It is more appropriate to address the biosecurity and food safety issue at this critical control point when compared to de-heading in an unfrozen state.

Additionally, manipulation of a frozen heads-on shrimp is easier since unfrozen shrimp are very slippery and thus this innovative method for de-heading and de-veining allows manipulation of the shrimp to be easier, faster, and more cost-effective, and makes possible its implementation on automated equipment and processing facilities, which provides opportunities for large cost savings relative to current manual processing.

### SUMMARY OF THE INVENTION

A first object of the present invention, method for de-heading and de-veining of raw heads-on whole shrimp, is a method according to claim 1. The method is to be applied on shrimps on head on shell (HOSO) in a frozen state.

All terms defined herein should be afforded their broadest possible interpretation, including any implied meanings. It should be stated that, as recited herein, the singular forms "a", "an", and "the" include the plural referents unless otherwise stated. Additionally, the terms "comprises" and "comprising" when used herein specify that certain features are present in that embodiment, however, this phrase should not be interpreted to preclude the presence or addition of additional steps, operations, features and/or components.

As already stated, the present invention is directed to a method of de-heading and de-veining shrimp. As used herein, the term "shrimp" is to be understood as including any available commercial shrimp species for human consumption, including prawns, such as Black Tiger shrimp (*Penaeus monodon*), white shrimp (*Penaeus merguiensis*), Pink shrimp (*Metapenaeus ensis*), Cat tiger, etc,. However the present invention's method is preferably used with globally farmed Whiteleg shrimp (*Litopenaeus vannamei,* or also called earlier as *Penaeus vannamei*). Whiteleg shrimp (*Litopenaeus vannamei,* formerly *Penaeus vannamei*), also known as Pacific white shrimp or king prawn (only in UK, SA and Australia), is a variety of prawn native to the eastern Pacific Ocean, from the Mexican state of Sonora to as far south as northern Peru. It is restricted to areas where the water temperatures remain above 20 °C throughout the year. It grows to a maximum length of 230 mm, with a head length of 90mm. Adults live in the ocean, at depths to 72m, while juveniles live in estuaries. The rostrum is moderately long, with 7-10 teeth on the dorsal part of the rostrum and two to four teeth on the lower part of the rostrum.

According to the present invention, the de-heading and de-veining method herein disclosed is to be used with raw head-on whole shrimp in a frozen state.

For the purpose of the present invention, the term "frozen state" refers to shrimps where the core body temperature is at range of minus 6 to minus 1 degrees centigrade and a preferred temperature of minus 1 degrees centigrade. With the shrimp in these range of temperatures the results expected by the method of the present invention can be achieved. At a colder temperature the body, tail or vein of the shrimp can break during the de-heading and, at warmer temperatures, the shrimp cannot be considered frozen and would lose its properties.

Shrimps in a frozen state to be used in the method of the present invention can be obtained commercially from distributors or suppliers under defined technical specifications for delivery, such as temperature and size of the shrimps.

The main steps of the method are:
a) pinching, gripping or clamping a shrimp, with a core body temperature between minus 6°C and minus 1°C, at the ventral part of the joint area between the head and the tail, the legs facing downwards,,
b) flexing the head back over the tail of the shrimp, specifically back over the dorsal part (opposite to the side where the shrimp has it legs) of the tail, so that the head is moved relative to the tail, said flexing of the head back preferably taking place for at least 90°, that is to say, up to when the head forms a 90° with the tail, and
c) moving the head and tail away from each other while at the same time the vein still attached to the head is removed from inside the tail.

The first step in addition to holding the shrimp, that is to say, pinching the same, serves to break the skeletal ventral muscles of the shrimp severing therefore the ventral nerve in the area between the pleopods or swimmeret and the pereiopods or legs.

It is a further embodiment of the present invention a method which further comprises a step for removing the shell covering the tail of the shrimp in a frozen state.

It is a further embodiment of the present invention a method as defined in previous paragraphs, which allows for, among others the option for the shrimp to be further fully frozen, cooked and/or prepared as ready to eat recipes.

A second object of the present invention is a device according to claim 5. Said device for de-heading and de-veining of a raw heads-on (HOSO) whole shrimp in a frozen state comprising:
- A first holding means for pressing the ventral part of the joint area between the head and tail of the shrimp, keeping the tail along a first axis, and
- A second holding means for gripping the head of the shrimp, said second holding means comprising mobilization means that allow at least a 90° degree movement of the second holding means with respect to the first axis, a backward movement of the head over the dorsal part of the tail (opposite to the side where the shrimp has its legs), followed by a movement separating said second holding means from said first holding means therefore separating the head of the shrimp from the tail as well as extracting the nerve from the tail.

Said device preferably comprises as retention means clamps or grippers or pliers that can be automated to work using robotic electric servos controlling the clamping movement. Further, said retention means are preferably made of stainless steel, waterproof servos and food grade plastics, although other components and materials could be used.

### BRIEF DESCRIPTION OF THE FIGURES

The description of the present invention is accompanied by the following figures that show the invention in an illustrative and non-limiting manner.
Figure 1 shows a shrimp with its parts
Figure 2 shows a shrimp during the second step of the method of the present invention
Figure 3 shows a shrimp with the head and the vein separated from the tail.

### DETAILED DESCRIPTION OF THE INVENTION

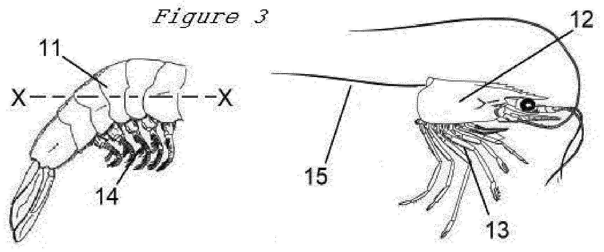

The following disclosure provides a description of a preferred example of the method for de-heading and de-veining of shrimps according to the present invention that comprises the following steps:
a) pinching the shrimp 10, with a temperature between -6 °C and -1 °C, at the ventral part of the joint 20 between the head 12 and the tail 11, with the legs 14 and the swimmeret 13 of the shrimp 10 facing downwards,
b) flexing the head 12 back over the dorsal part of the tail 11 (T movement in Figure 2), preferably up to 90 degrees relative to the tail 11 (see Figure 2) and
c) moving the head 12 and tail 11 away from each other while, in the same movement, removing the vein 15 from inside the tail 11 as it is still attached to the head (see Figure 3).

All previous steps take place rapidly, preferably within 5 seconds, in order to maintain the food safety properties of the shrimp.

The previous example shows the shrimp 10 with the legs 14 facing downwards and the head 12 being flexed backwards and upwards, over the dorsal part, or opposite side to where the legs 14 are, of the tail 11, but alternatively, the shrimp 10 could be placed with the legs 14 facing upwards and therefore the head 12 would be flexed backwards and downwards. Therefore, the head 12 has to be flexed over the dorsal part of the tail 11 (opposite to where the legs 14 are) in a relative movement of the head 12 with respect to the tail 11.

Once the shrimp 10 has been de-headed, the frozen shrimp 10 can be further peeled to market requirement by removal of the shell covering the tail 11 and be subject to common processing techniques to provide end products ready to be consumed.

Among other techniques, the shrimp 10 can be fully frozen again, cooked and/or prepared as ready to eat shrimp recipes.

By gripping the shrimp 10 and applying pressure at the ventral point 15 where the head 12 and tail 11 join, between the swimmeret 13 and legs 14, the skeletal muscles can be broken and the ventral nerve cut.

Further, as already explained, the head 12 can be moved up, flexing (T) it with respect to the tail 11, head 12 over the dorsal part of the tail 11. Therefore, the legs 14 and swimmerets 13 of the shrimp 10 facing preferably downwards and turning or flexing the head 12 backwards and upwards, so that the head 12 and tail 11 can be separated away from each other with the vein 15 still attached to the head 12. To completely extract the vein 20 from the tail 11, the head 12 is moved away or separated from the tail 11 at the same time as the vein 15 is gently pulled out of the tail 11.

The above method is preferably executed on a device for de-heading and de-veining shrimps 10. Said device comprises
- a first holding means for pressing the ventral part of the joint 15 area between the head 12 and tail 11 of the shrimp 10, keeping the tail 11 along a first axis X, with the legs 14 and swimmerets 13 facing downwards, and
- a second holding means for gripping the head 12 of the shrimp 10, said second holding means comprising mobilization means that allow at least a 90° degree movement of the second holding means with respect to the first axis, flexing the head 12 over the dorsal part of the tail 12, and an away movement from the first holding means to separate the head 12 of the shrimp 10 from the tail 11.

After the separation of the head 12 and the tail 11, the shrimp tail 11 can then be released from the first holding means and the head 12 and the removed vein 20 are released from the second holding means.

Additionally, both the first and second holding means are automated to work using robotic electric servos to control the clamping movement of the first and second holding means.

The first holding means that hold the tail 11 of the shrimp which, when closes to clamp said tail 11, pressures on the ventral part of the joint 20 between the head 12 and the tail 11 allowing the pinching of the skeletal muscles causing the sever of the ventral nerve at the point 20 between the swimmeret 13 and the legs 14. The head 12 of the shrimp 10 is held with separate clamping, gripping, or pliers as a second holding means.

Preferably, the device is made from materials that allow for wash-down and sterilization; for example, first and second holding means made from stainless steel, with waterproof servos and food grade plastics.

## Claims

1. A method for de-heading and de-veining a raw head-on of a shrimp (10) in a frozen state **characterized in that** it comprises:
a) pinching, gripping or clamping a frozen shrimp (10) at the ventral part of the joint area (20) between the head (12) and the tail (11),
b) flexing the head (12) back over the dorsal part of the tail (11) and then,
c) moving the head (12) and tail (11) away from each other while at the same time the vein (15), still attached to the head (12), is removed from inside the tail (11).

2. Method, according to claim 1, **characterized in that** the core body temperature of the shrimp in a frozen state is between -6°C and -1°C.

3. Method, according to any of the previous claims, **characterized in that** the head (12) is flexed at least 90° relative to the tail (11).

4. Method, according to any of the previous claims, **characterized in that** after step c) the shell covering the tail (11) is removed partially or totally.

5. Method, according to any of the previous claims, **characterized in that** after step c) the shrimp is at least re-frozen, or cooked or prepared for a ready to eat receipt.

6. A device for de-heading and de-veining of a raw heads-on whole (HOSO) shrimp in a frozen state comprising:
- first holding means for pressing the ventral part of the joint area (20) between the head (12) and tail (11) of the shrimp (10), keeping the tail (11) along a first axis (X), and
- second holding means for gripping the head (12) of the shrimp (10), said second holding means comprising mobilization means that allow at least a 90° degree movement of the second holding means with respect to the first axis (X), flexing the head (12) over the dorsal part of the tail (11) of the shrimp (10) and an away movement from the first holding means to separate the head (12) of the shrimp (10) from the tail (11).

7. A device according to any of previous claims 6, **characterized in that** the holding means are automated clamps and/or vices and/ or grippers and/ or pliers with robotic electric servos to control the clamping movement.

8. A device according to any of claims 6 or 7 **characterized in that** said holding means are made from stainless steel, with waterproof servos and food grade plastics.
